# EUROPÄISCHE PATENTSCHRIFT

(11) **EP 1 694 778 B1**
(45) Veröffentlichungstag und Bekanntmachung des Hinweises auf die Patenterteilung: **16.02.2011**
(21) Anmeldenummer: 04803622.2
(22) Anmeldetag: 08.12.2004
(51) Int. Cl.: C09B 67/22

(54) **MONOAZOPIGMENTZUBEREITUNGEN AUF BASIS VON C.I. PIGMENT YELLOW 74**
MONOAZO PIGMENT PREPARATIONS BASED ON CI PIGMENT YELLOW 74
PREPARATIONS PIGMENTAIRES MONOAZO A BASE DE PIGMENT JAUNE C.I. 74

(30) Priorität: 12.12.2003 DE 10358209
(43) Veröffentlichungstag der Anmeldung: 30.08.2006
(73) Patentinhaber: Clariant Produkte (Deutschland) GmbH, 65929 Frankfurt am Main (DE)
(72) Erfinder: GRIMM, Felix, W., 65719 Hofheim (DE); SCHÜLLER, Jörg, 50321 Brühl (DE); NIERADZIK, Wojciech, 65510 Idstein-Wörsdorf (DE); SINDERMANN, Werner, 50354 Hürth (DE); WEBER, Joachim, CH-4153 Reinach (CH); JUNG, Rüdiger, 65779 Kelkheim (DE); NESTLER, Bernd, Shizuoka Pref. 436-0079 (JP)
(74) Vertreter: Hütter, Klaus
(86) Internationale Anmeldenummer: PCT/EP2004/013946
(87) Internationale Veröffentlichungsnummer: WO 2005/056695

(56) Entgegenhaltungen:
- EP-A- 1 316 588
- GB-A- 2 364 322
- JP-B- 45 011 026
- US-A- 3 759 733
- US-A- 4 457 783
- US-A- 5 024 698
- DATABASE WPI Section Ch, Week 199834 Derwent Publications Ltd., London, GB; Class E21, AN 1998-393679 XP002317840 -& JP 10 158555 A (DAINICHISEIKA COLOR & CHEM MFG) 16. Juni 1998 (1998-06-16)
- DATABASE WPI Section Ch, Week 200060 Derwent Publications Ltd., London, GB; Class A97, AN 2000-622043 XP002317841 & JP 2000 239594 A (DAINIPPON INK & CHEM INC) 5. September 2000 (2000-09-05)

## Beschreibung

Die vorliegende Erfindung betrifft Monoazopigmentzubereitungen auf Basis von C.I. Pigment Yellow 74, sowie deren Herstellung und Verwendung zum Färben von hochmolekularen Materialien.

Die US-A-3 759 733 offenbart Pigmentzubereitungen aus dem Kupplungsprodukt eines diazotierten Anilins mit einem Acetoacetylarylamid und aus einem wasserlöslichen Farbstoff.

Die JP-45-11026 offenbart ebenfalls Pigmentzubereitungen aus dem Kupplungsprodukt eines diazotierten Anilins mit einem Acetoacetylarylamid und aus einem wasserlöslichen Farbstoff.

Die EP-A-1 316 588 offenbart spezielle Pigmentzubereitungen mit carbonamid- oder sulfonamidsubstituierten Derivaten.

Bei der Verwendung von Pigmentzubereitungen zum Färben von hochmolekularen organischen Materialien werden hohe Anforderungen an die anwendungstechnischen Eigenschaften der Pigmente gestellt, wie hohe Farbstärken, hohe Buntheit (Chroma) und gute Licht- und Wetterechtheit. Beim Einsatz in Drucksystemen sind niedrige Viskositäten der Druckfarben gefordert, beim Einsatz in Lacksystemen einwandfreie Überlackierechtheiten, niedrige Viskosität der hochpigmentierten Lackkonzentrate (millbase) und der fertigen Lacke und insbesondere im Falle von Metalliclackierungen hohe Transparenz und brillante Farbtöne. Im Falle der Kunststoffeinfärbung wird gute Dispergierbarkeit verlangt, was z.B. in hohen Farbstärken zum Ausdruck kommt. Außerdem ist eine möglichst universelle Einsetzbarkeit in verschiedenen Systemen, beispielsweise in wässrigen und lösemittelhaltigen Systemen erwünscht.

Die bekannten Monoazopigmentzubereitungen auf Basis C.I. Pigment Yellow 74 genügen nicht allen heutigen Anforderungen. Daher bestand die Aufgabe, gelbe Pigmentzubereitungen mit verbesserten Eigenschaften zu finden.

Es wurde gefunden, dass die Aufgabe überraschenderweise durch nachstehend definierte Pigmentzubereitung gelöst wird.

Gegenstand der vorliegenden Erfindung ist eine Pigmentzubereitung, enthaltend C.I. Pigment Yellow 74 gemäß Formel (I) als Basispigment und C.I. Pigment Yellow 62 gemäß Formel (II) als Pigmentdispergator.

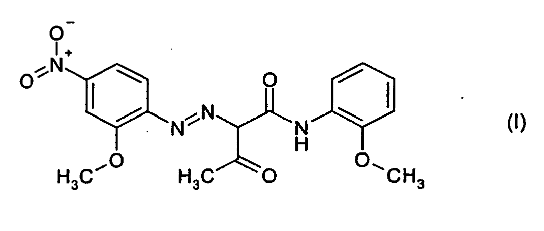

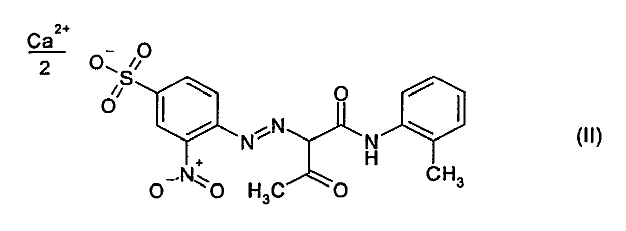

Bevorzugte Pigmentzubereitungen im Sinne der vorliegenden Erfindung enthalten
a) 50 bis 99,9 Gew.-%, vorzugsweise 60 bis 99,5 Gew.-%, besonders bevorzugt 65 bis 99 Gew.-%, C.I. Pigment Yellow 74,
b) 0,1 bis 25 Gew.-%, vorzugsweise 0,5 bis 15 Gew.-%, besonders bevorzugt 1 bis 10 Gew.-%, C.I. Pigment Yellow 62,
c) 0 bis 25 Gew.-%, vorzugsweise 0,1 bis 15 Gew.-% an Hilfsmitteln,
wobei die Anteile der jeweiligen Komponenten auf das Gesamtgewicht der Zubereitung (100 Gew.-%) bezogen sind.

Als Hilfsmittel kommen beispielsweise Tenside, Dispergiermittel, Füllstoffe, Stellmittel, Harze, Wachse, Entschäumer, Antistaubmittel, Extender, Antistatika, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, oder eine Kombination davon in Betracht. Nuancierkomponenten werden üblicher Weise in Mengen bis zu 10 Gew.-% und Hilfsmittel in Mengen bis zu 40 Gew.-%, jeweils bezogen auf die Gesamtmenge des erfindungsgemäß eingesetzten C.I. Pigment Yellow 74 eingesetzt. Es können jedoch in Ausnahmefällen auch höhere Mengen vorkommen.

Die erfindungsgemäße Pigmentzubereitung kann nach verschiedenen Verfahren hergestellt werden, beispielsweise indem man das Basispigment und den Pigmentdispergator nach getrennter Synthese, und gegebenenfalls das oder die Hilfsmittel miteinander mischt, oder indem der Pigmentdispergator und das Basispigment gemeinsam synthetisiert werden.

C.I. Pigment Yellow 74 und C.I. Pigment Yellow 62 sind bekannte Verbindungen, die sich nach bekannten Verfahren durch Azokupplung herstellen lassen, wobei ein entsprechendes Amin diazotiert wird und mit dem entsprechenden Acetoacetanilid als Kuppler gekuppelt wird. Im Falle des C.I. Pigment Yellow 62 wird gewöhnlicherweise die freie Säure, das ist das C.I. Pigment Yellow 62:1, bzw. ein leichter lösliches Salz des Pigmentdispergators durch Azokupplung hergestellt und anschließend mit einem Calciumsalz oder -hydroxid verlackt. Da die Verlackung nicht immer vollständig verläuft, können auch noch geringe Anteile an freier Sulfosäure (C.I. Pigment Yellow 62:1) oder eines ihrer leicht löslichen Salze, wie beispielsweise das Natrium- oder Kaliumsalz, in der erfindungsgemäßen Pigmentzubereitung enthalten sein.

Die Zugabe des Pigmentdispergators zum Basispigment kann an einer beliebigen Stelle im Herstellungsverfahren des Basispigments und in verschiedenen Formen erfolgen, beispielsweise kann der Pigmentdispergator als Suspension oder als wässrig-feuchter Presskuchen zur Suspension des Basispigments zugegeben, die wässrig-feuchten Presskuchen des Basispigments und des Pigmentdispergators können in entsprechenden Apparaten vermischt werden, oder sie werden trocken miteinander vermischt, beispielsweise in Form von Granulaten oder Pulvern. Eine Zugabe des Pigmentdispergators vor der Isolation des Basispigments kann beispielsweise auch vor oder nach einer thermischen Behandlung der Suspension des Basispigments geschehen.

Im Falle der gemeinsamen Synthese können die Azokupplungen prinzipiell diskontinuierlich direkt oder indirekt geschehen, d.h. durch Zugabe des Diazoniumsalzes zum Kuppler oder umgekehrt, es kann auch eine kontinuierliche Verfahrensweise gewählt werden durch Einsatz einer Mischdüse, eines Mikroreaktors oder eines Mikrojetreaktors und gleichzeitigem, kontinuierlichem Einspeisen des Diazoniumsalzes und der Kupplungskomponente.

Sowohl das Diazoniumsalz als auch die Kupplungskomponente können gelöst oder als Suspension eingesetzt werden, im Falle der indirekten Kupplung ist auch der Einsatz der Kupplungskomponente in fester Form möglich.

Die Aminkomponenten des Basispigments und des Pigmentdispergators können gemeinsam oder getrennt diazotiert werden. Die Diazoniumsalze können bei direkter Kupplung getrennt oder als Mischung gemeinsam zugegeben oder bei indirekter Kupplung gemeinsam vorgelegt werden. Die Kupplungskomponenten des Basispigments und des Pigmentdispergators können bei direkter Kupplung gemeinsam vorliegen oder bei indirekter Kupplung gemeinsam oder getrennt zugegeben werden.

Es kann auch zuerst die eine Komponente (Basispigment oder Pigmentdispergator) hergestellt werden und die Azokupplung der zweiten Komponente in Gegenwart der Suspension der ersten Komponente durchgeführt werden.

Bevorzugt wird das Basispigment durch direkte Kupplung hergestellt, indem das als Lösung oder Suspension vorliegenden Diazoniumsalz zur frisch gefällten Suspension der Kupplungskomponente zugegeben wird, und der Pigmentdispergator wird als feuchter Presskuchen oder als trockenes Pulver zur fertigen Kuppelsuspension des Basispigments zugegeben.

Es kann vorteilhaft sein, die Kupplung in Gegenwart gebräuchlicher, die Kupplung fördernder Mittel durchzuführen, wie beispielsweise langkettige Aminoxide und Phosphinoxide.
Auch Kupplungen in wässrig-organischen oder rein organischen Medium können zur Herstellung der Kupplungsprodukte zum Einsatz kommen.
Die bei der Azokupplung wesentlichen Verfahrensparameter wie beispielsweise Zeit, Temperatur, pH-Wert, Einsatz von Puffern, Lösemitteln oder Tensiden sind aus der Literatur dem Fachmann bekannt.

Zur Erzielung der gewünschten anwendungstechnischen, besonders der coloristischen Eigenschaften kann eine Wärmebehandlung der Kuppelsuspension des Basispigments vor der endgültigen Isolation erforderlich sein, die in Gegenwart oder Abwesenheit des Pigmentdispergators durchgeführt werden kann. Dazu kann auch der isolierte und feuchte Presskuchen des Präpigments wieder in einem flüssigen Medium dispergiert werden. Als flüssige Medien kommen neben der Kuppelbrühe und Wasser auch organische Lösungsmittel oder eine Mischung aus Wasser und organischem Lösungsmittel in Betracht, wobei das Wasser und das organische Lösungsmittel weder bei Raumtemperatur noch bei einer anderen Temperatur vollständig miteinander mischbar sein müssen, um eine für die Anwendung spezifische Kristallmodifikation und/oder Kristallform und/oder Korngrößenverteilung zu erzeugen. Bei der Wärmebehandlung können Temperaturen von beispielsweise 50 bis 200°C auftreten. Als organisches Lösemittel kommen in Frage: Alkohole mit 1 bis 10 C-Atomen, Glykole, Polyglykole, Ether, Glykolether, Polyethylenglykolmonomethylether, Polyethylenglykoldimethylether, Ketone, aliphatische Säureamide, Harnstoffderivate, cyclische Carbonsäureamide, Nitrile, aliphatische oder aromatische Amine, gegebenenfalls halogenierte aliphatische Kohlenwasserstoffe, gegebenenfalls durch Alkyl, Alkoxy, Nitro, Cyano oder Halogen substituierte aromatische Kohlenwasserstoffe, aromatische Heterocyclen, Sulfone und Sulfoxide, sowie Mischungen dieser organischen Lösemittel. Bevorzugte Lösemittel sind C₁-C₆-Alkohole, insbesondere Methanol, Ethanol, n- und Isopropanol, Isobutanol, n- und tert.-Butanol und tert.-Amylalkohol; C₃-C₆-Ketone, insbesondere Aceton, Methylethylketon oder Diethylketon; Tetrahydrofuran, Dioxan, Ethylenglykol, Diethylenglykol oder Ethylenglykol-C₃-C₅-alkylether, insbesondere 2-Methoxyethanol, 2-Ethoxyethanol, Butylglykol, Toluol, Xylol, Ethylbenzol, Chlorbenzol, o-Dichlorbenzol, N,N-Dimethylacetamid, N-Methylpyrrolidon, Dimethylsulfoxid oder Sulfolan.

Die Zugabe von Hilfsmitteln kann zu einem beliebigen Zeitpunkt erfolgen, auf einmal oder in mehreren Portionen. Sie können beispielsweise bereits vor der Kupplung, vor dem Finish oder erst nach dem Finish oder auch durch Mischen in trockenem Zustand zugegeben werden.

Als Tenside kommen anionische oder anionaktive, kationische oder kationaktive und nichtionische oder amphotere Substanzen oder Mischungen dieser Mittel in Betracht.

Als anionaktive Substanzen kommen beispielsweise Fettsäuretauride, FettsäureN-methyltauride, Fettsäureisethionate, Alkylphenylsulfonate, beispielsweise Dodecylbenzolsulfonsäure, Alkylnaphthalinsulfonate, Alkylphenolpolyglykolethersulfate, Fettalkoholpolyglykolethersulfate, Fettsäureamid-polyglykolethersulfate, Alkylsulfosuccinamate, Alkenylbernsteinsäurehalbester, Fettalkoholpolyglykolethersulfosuccinate, Alkansulfonate, Fettsäureglutamate, Alkylsulfosuccinate, Fettsäuresarkoside; Fettsäuren, beispielsweise Palmitin-, Stearin- und Ölsäure; die Salze dieser anionischen Substanzen und Seifen, beispielsweise Alkalisalze von Fettsäuren, Naphthensäuren und Harzsäuren, beispielsweise Abietinsäure, alkalilösliche Harze, beispielsweise kolophoniummodifizierte Maleinatharze und Kondensationsprodukte auf Basis von Cyanurchlorid, Taurin, N,N'-Diethylaminopropylamin und p-Phenylendiamin in Betracht. Bevorzugt sind Harzseifen, d.h. Alkalisalze von Harzsäuren.

Als kationaktive Substanzen kommen beispielsweise quaternäre Ammoniumsalze, Fettaminoxalkylate, Polyoxyalkylenamine, oxalkylierte Polyamine, Fettaminpolyglykolether, primäre, sekundäre oder tertiäre Amine, beispielsweise Alkyl-, Cycloalkyl oder cyclisierte Alkylamine, insbesondere Fettamine, von Fettaminen oder Fettalkoholen abgeleitete Di- und Polyamine und deren Oxalkylate, von Fettsäuren abgeleitete Imidazoline, Polyaminoamido- oder Polyaminoverbindungen oder -harze mit einem Aminindex zwischen 100 und 800 mg KOH pro g der Polyaminoamido- oder Polyaminoverbindung, und Salze dieser kationenaktiven Substanzen, wie beispielsweise Acetate oder Chloride, in Betracht.

Als nichtionogene und amphotere Substanzen kommen beispielsweise Fettamincarboxyglycinate, Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethern, Fettsäureamidethoxylate, Fettalkoholalkylenoxid-Addukte und Alkylphenolpolyglykolether in Betracht.

Die Dispergiermittel werden entweder bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln, zugegeben. Es können polymere Substanzen sein, beispielsweise Polyolefine, Polyester, Polyether, Polyamide, Polyimine, Polyacrylate, Polyisocyanate, Blockcopolymere daraus, Copolymere aus den entsprechenden Monomeren oder Polymere einer Klasse, die mit wenigen Monomeren einer anderen Klasse modifiziert sind. Diese polymeren Substanzen tragen polare Ankergruppen wie beispielsweise-Hydroxy-, Amino-, Imino- und Ammoniumgruppen, Carbonsäure- und Carboxylatgruppen, Sulfonsäure- und Sulfonatgruppen oder Phosphonsäure- und Phosphonatgruppen, und können auch mit aromatischen Substanzen modifiziert sein. Dispergiermittel können des weiteren auch chemisch mit funktionellen Gruppen modifizierte aromatische Substanzen sein. Derartige Dispergiermittel sind dem Fachmann bekannt und zum Teil im Handel erhältlich (z.B. Solsperse^{®}, Avecia; Disperbyk^{®}, Byk-Chemie, Efka^{®}, Efka). Es sollen im Folgenden stellvertretend einige Typen genannt werden, zum Einsatz können jedoch prinzipiell beliebige andere, beschriebene Substanzen kommen, beispielsweise Kondensationsprodukte aus Isocyanaten und Alkoholen, Di- oder Polyolen, Aminoalkoholen oder Di- oder Polyaminen, Polymere aus Hydroxycarbonsäuren, Copolymere aus Olefinmonomeren oder Vinylmonomeren und ethylenisch ungesättigten Carbonsäuren und -estern, urethanhaltige Polymere von ethylenisch ungesättigten Monomeren, urethanmodifizierte Polyester, Kondensationsprodukte auf Basis von Cyanurhalogeniden, Nitroxylverbindungen enthaltende Polymere, Polyesteramide, modifizierte Polyamide, modifizierte Acrylpolymere, Dispergiermittel mit kammartiger Struktur aus Polyestern und Acrylpolymeren, Phosphorsäureester, von Triazin abgeleitete Polymere, modifizierte Polyether. Dabei werden diese Grundstrukturen vielfach weiter modifiziert, beispielsweise durch chemische Umsetzung mit weiteren, funktionelle Gruppen tragenden Substanzen oder durch Salzbildung.

Anionische Gruppen der als Hilfsmittel eingesetzten Dispergiermittel, Tenside oder Harze können auch verlackt werden, beispielsweise durch Ca-, Mg-, Ba-, Sr-, Mn- oder Al-lonen oder durch quaternäre Ammoniumionen.

Mit Füllstoffen bzw. Extendern sind eine Vielzahl von Substanzen gemäß DIN 55943 und DIN EN 971-1 gemeint, beispielsweise die verschiedenen Typen von Talk, Kaolin, Glimmer, Dolomit, Kalk, Bariumsulfat oder Titandioxid. Dabei hat sich die Zugabe besonders vor der Pulverisierung der getrockneten Pigmentzubereitung bewährt.

Die erfindungsgemäße Pigmentzubereitung kann als vorzugsweise wässriger Presskuchen oder Feuchtgranulat zum Einsatz kommen, in der Regel handelt es sich jedoch um feste Systeme von rieselfähiger, pulverförmiger Beschaffenheit oder um Granulate.

Die erfindungsgemäßen Pigmentzubereitungen lassen sich zum Pigmentieren von hochmolekularen organischen Materialien natürlicher oder synthetischer Herkunft einsetzen, beispielsweise von Kunststoffen, Harzen, Lacken, Anstrichfarben, elektrophotographischen Tonern und Entwicklern, Elektretmaterialien, Farbfilter sowie von Tinten, Druckfarben und Saatgut.

Hochmolekulare organische Materialien, die mit den erfindungsgemäßen Pigmentzubereitungen pigmentiert werden können, sind beispielsweise Celluloseverbindungen, wie beispielsweise Celluloseether und -ester, wie Ethylcellulose, Nitrocellulose, Celluloseacetate oder Cellulosebutyrate, natürliche Bindemittel, wie beispielsweise Fettsäuren, fette Öle, Harze und deren Umwandlungsprodukte, oder Kunstharze, wie Polykondensate, Polyaddukte, Polymerisate und Copolymerisate, wie beispielsweise Aminoplaste, insbesondere Harnstoff- und Melaminformaldehydharze, Alkydharze, Acrylharze, Phenoplaste und Phenolharze, wie Novolake oder Resole, Harnstoffharze, Polyvinyle, wie Polyvinylalkohole, Polyvinylacetale, Polyvinylacetate oder Polyvinylether, Polycarbonate, Polyolefine, wie Polystyrol, Polyvinylchlorid, Polyethylen oder Polypropylen, Poly(meth)acrylate und deren Copolymerisate, wie Polyacrylsäureester oder Polyacrylnitrile, Polyamide, Polyester, Polyurethane, Cumaron-Inden- und Kohlenwasserstoffharze, Epoxidharze, ungesättigte Kunstharze (Polyester, Acrylate) mit den unterschiedlichen Härtemechanismen, Wachse, Aldehyd- und Ketonharze, Gummi, Kautschuk und seine Derivate und Latices, Casein, Silikone und Silikonharze; einzeln oder in Mischungen. Dabei spielt es keine Rolle, ob die erwähnten hochmolekularen organischen Verbindungen als plastische Massen, Schmelzen oder in Form von Spinnlösungen, Dispersionen, Lacken, Anstrichstoffen oder Druckfarben vorliegen. Je nach Verwendungszweck erweist es sich als vorteilhaft, die erfindungsgemäßen Pigmentzubereitungen als Blend oder in Form von Präparationen oder Dispersionen zu benutzen. Bezogen auf das zu pigmentierende, hochmolekulare organische Material setzt man die erfindungsgemäßen Pigmentzubereitungen in einer Menge von 0,05 bis 30 Gew.-%, vorzugsweise 0,1 bis 15 Gew.-%, ein.

Die erfindungsgemäßen Pigmentzubereitungen sind auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Latextoner, Polymerisationstoner sowie Spezialtoner.
Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des weiteren sind die erfindungsgemäßen Pigmentzubereitungen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen. Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Gegenstand der Erfindung ist weiterhin die Verwendung der erfindungsgemäßen Pigmentzubereitungen als Farbmittel für Drucktinten, insbesondere für Ink-Jet-Tinten.
Unter Ink-Jet-Tinten versteht man sowohl Tinten auf wässriger (einschließlich Mikroemulsionstinten) und nicht-wässriger ("solvent-based") Basis, UV-härtbare Tinten sowie solche Tinten, die nach dem Hot-Melt-Verfahren arbeiten.

Ink-Jet-Tinten auf Lösungsmittelbasis enthalten im wesentlichen 0,5 bis 30 Gew.-%, vorzugsweise 1 bis 15 Gew.-%, der erfindungsgemäßen Pigmentzubereitung, 70 bis 95 Gew.-% eines organischen Lösungsmittels oder Lösungsmittelgemisches und/oder einer hydrotropen Verbindung. Gegebenenfalls können die lösemittelbasierenden Ink-Jet-Tinten Trägermaterialien und Bindemittel enthalten, die im "Solvens" löslich sind, wie z.B. Polyolefine, Natur- und Synthesekautschuk, Polyvinylchlorid, Vinylchlorid/Vinylacetat-Copolymerisate, Polyvinylbutyrale, Wachs/Latex-Systeme oder Kombinationen dieser Verbindungen.
Gegebenenfalls können die lösungsmittelbasierenden Ink-Jet-Tinten noch Bindemittel und weitere Zusatzstoffe enthalten, wie z.B. Netzmittel, Entgaser/Entschäumer, Konservierungsmittel und Antioxidantien.

Mikroemulsionstinten basieren auf organischen Lösemitteln, Wasser und gegebenenfalls einer zusätzlichen Substanz, die als Grenzflächenvermittler wirkt (Tensid). Mikroemulsionstinten enthalten 0,5 bis 30 Gew.-%, vorzugsweise 1 bis 15 Gew.-%, einer erfindungsgemäßen Pigmentzubereitung, 0,5 bis 95 Gew.-% Wasser und 0,5 bis 95 Gew.-% organische Lösungsmittel und/oder Grenzflächenvermittler.

UV-härtbare Tinten enthalten im wesentlichen 0,5 bis 30 Gew.-% einer erfindungsgemäßen Pigmentzubereitung, 0,5 bis 95 Gew.-% Wasser, 0,5 bis 95 Gew.-% eines organischen Lösungsmittels oder Lösungsmittelgemisches, 0,5 bis 50 Gew.-% eines strahlungshärtbaren Bindemittels und gegebenenfalls 0 bis 10 Gew.-% eines Photoinitiators.
Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60 und ca. 140°C liegt.

Hot-Melt-Ink-Jet-Tinten bestehen im wesentlichen aus 20 bis 90 Gew.-% Wachs und 1 bis 10 Gew.-% einer erfindungsgemäßen Pigmentzubereitung. Weiterhin können 0 bis 20 Gew.-% eines zusätzlichen Polymers (als "Farbstofflöser"), 0 bis 5 Gew.-% Dispergiermittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. die Kristallisation des Wachses) sowie 0 bis 2 Gew.-% Antioxidans enthalten sein.

Die erfindungsgemäßen Drucktinten, insbesondere Ink-Jet-Tinten, können hergestellt werden, indem die Farbmittelpräparationen in das Mikroemulsionsmedium in das nicht-wässrige Medium oder in das Medium zur Herstellung der UV-härtbaren Tinte oder in das Wachs zur Herstellung einer Hot-Melt-Ink-Jet-Tinte eindispergiert wird.
Zweckmäßigerweise werden die dabei erhaltenen Drucktinten für Ink-Jet-Anwendungen anschließend filtriert (z.B. über einen 1 µm Filter).

Weiterhin ist die erfindungsgemäße Pigmentzubereitung auch als Farbmittel für Farbfilter, sowohl für die additive wie auch für die subtraktive Farberzeugung, sowie als Farbmittel für elektronische Tinten ("electronic inks" bzw "e-inks") oder "electronic paper" ("e-paper") geeignet.
Bei der Herstellung sogenannter Farbfilter, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelantine, Caseine) auf die jeweiligen LCD-Bauteilen (z.B. TFT-LCD= Thin Film Transistor Liquid Crystal Displays oder z.B. ((S) TN-LCD = (Super) Twisted Nematic-LCD) aufgebracht. Neben einer hohen Thermostabilität ist für eine stabile Paste bzw. einem pigmentierten Photoresist auch eine hohe Pigmentreinheit Voraussetzung. Darüberhinaus können die pigmentierten Color Filter auch durch Ink Jet-Druckverfahren oder andere geeignete Druckverfahren aufgebracht werden.

Es war überraschend, dass die erfindungsgemäße Pigmentzubereitung aus P.Y. 74 und P.Y. 62 gegenüber der in der US-3 759 733, Beispiel 14 offenbarten Zubereitung aus P.Y. 74 und P.Y. 168, sowohl beim Einsatz in lösemittelhaltigen Druckfarbensystemen als auch in wässrigen Druckfarbensystemen Vorteile zeigt. Weiterhin war es überraschend, dass die erfindungsgemäße Pigmentzubereitung auch in von Druckfarbensystemen völlig verschiedenen Systemen, wie sie Kunststoffsysteme und Lacksysteme darstellen, Vorteile zeigt.

Zur Beurteilung der Eigenschaften auf dem Kunststoffsektor wurde aus der Vielzahl der bekannten Kunststoffe ein high density Polyethylen (HDPE) ausgewählt.
Zur Beurteilung der Eigenschaften der Pigmente auf dem Drucksektor wurde aus der Vielzahl der bekannten Drucksysteme ein Alkohol-Ester-Tiefdrucksystem auf Nitrocellulosebasis (NC) und ein wässriges Flexodrucksystem auf Acrylharzbasis (FD) ausgewählt.
Zur Beurteilung der Eigenschaften der Pigmente auf dem Lacksektor in wasserfreien, lösemittelbasierenden Lacksystemen wurden aus der Vielzahl der bekannten Lacke ein Polyesterlack (PE) auf Basis von Celluloseacetobutyrat und eines Melaminharzes sowie ein lufttrocknender Lack (LA) auf Basis eines langöligen Alkydharzes ausgewählt.
Zur Beurteilung der Eigenschaften der Pigmente auf dem Lacksektor in wässrigen Lacksystemen wurde aus der Vielzahl der bekannten Lacksysteme ein wässriger Lack auf Polyurethanbasis (PUR) ausgewählt.
Zur Beurteilung der Eignung der Pigmentzubereitungen zur Verwendung bei der Herstellung von elektrophotographischen Tonern wurde ihre Dispergierbarkeit in wässrigen Systemen geprüft. Dazu wurde eine wässrige Weißdispersionsfarbe auf Polyvinylacetatbasis (PVA) gewählt. Die Pigmentzubereitung wird in Form einer wässrigen Dispersion in dieses PVA-System eingerührt. Die wässrige Dispersion besteht aus 17 Gew.-% Pigmentzubereitung, 1,5 Gew.-% anionischem Dispergiermittel (z.B. Sulfat oder Sulfonat) und 81,5 Gew.-% Wasser, hergestellte durch Perlmahlung mit keramischen Perlen mit 0,4 bis 0,6 mm Durchmesser.

Die Bestimmung der Farbstärke und des Chroma erfolgte nach DIN 5033, DIN 55986 und DIN 53235.
Die Rheologie des Mahlguts nach der Dispergierung (millbase-Rheologie) wurde visuell anhand der folgenden fünfstufigen Skala bewertet.

| | |
|---|---|
| 5 | dünnflüssig |
| 4 | flüssig |
| 3 | dickflüssig |
| 2 | leicht gestockt |
| 1 | gestockt |

Die Bestimmung der Viskosität erfolgte nach dem Verdünnen des Mahlguts auf die Pigmentendkonzentration mit dem Viskospatel nach Rossmann, Typ 301 der Firma Erichsen.
Die Viskosität der Druckfarben wurde mittels eines Rotationsviskosimeters gemessen.
Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.

In den nachfolgenden Beispielen bedeuten Teile jeweils Gewichtsteile und Prozente jeweils Gewichtsprozente.

### Beispiel 1

### a) Diazokomponente

84 Teile 5-Nitro-2-aminoanisol werden in 210 Teilen Wasser und 132,2 Teilen Salzsäure 31 %ig angeschlämmt. Mit 420 Teilen Eis-Wasser-Gemisch wird auf 0°C abgekühlt, durch Zugabe von 85,2 Teilen Natriumnitrit-Lösung 40 %ig diazotiert.

### b) Kuppler

In 1345 Teilen Wasser und 104 Teilen Natronlauge 25%ig werden 103,5 Teile Acetessig-o-anisidid gelöst. Nach Zugabe von 3,5 Teilen einer 20 %igen wässrigen Lösung von Natriumlaurylsulfat wird durch Zugabe von Eis auf 10°C abgekühlt. Durch Zugabe von 48,1 Teilen Essigsäure 80 %ig wird der Kuppler gefällt. Dann werden eine Lösung von 20 Teilen eines maleinsäuremodifizierten Kolophoniumharzester in 168 Teilen Wasser und 27,3 Teilen Natronlauge 25 %ig zugegeben und mit Essigsäure 80 %ig auf pH 9,8 gestellt.

### c) Kupplung

Die Diazokomponente wird in einer Stunde zum Kuppler zugegeben.

### d) Zugabe des Pigmentdispergators und eines Hilfsmittels

Es werden 3,9 Teile C.I. Pigment Yellow 62 und 3,9 Teile hydriertes Talgfettamin, gelöst in 50 Teilen Wasser mit 6,4 Teilen Essigsäure 80 %ig zugegeben. Dann wird 17 Stunden bei 80°C gerührt. Die Suspension wird filtriert, der Presskuchen wird bei 130°C getrocknet.

In den PE-, LA- und PUR Systemen werden farbstarke, transparente Lackierungen mit reinem Farbton erhalten.
Im HDPE-System werden farbstarke Färbungen mit hoher Buntheit (Chroma) erhalten.
In den NC- und FD-Systemen werden farbstarke Drucke erhalten mit reinem Farbton, hohem Glanz und hoher Transparenz, die Viskosität der Druckfarbe ist niedrig.
Im PVA-System werden farbstarke und transparente Färbungen von reinem Farbton erhalten. Dies zeigt die gute Dispergierbarkeit.

### Vergleichsbeispiel 1

Das Beispiel 1 wird durchgeführt mit dem einzigen Unterschied, dass 3,9 Teile C.I. Pigment Yellow 168 an Stelle der 3,9 Teile C.I. Pigment Yellow 62 eingesetzt werden.

### Vorteile von Beispiel 1 gegen Vergleichsbeispiel 1

Beispiel 1 wird gegen das Vergleichsbeispiel 1 in verschiedenen Systemen geprüft.

| Prüfsystem | Beispiel 1 | | Vergleichsbeispiel 1 | |
|---|---|---|---|---|
| HDPE | Farbstärke: | 1154 mg/kg für | Farbstärke: | 1686 mg/kg für |
| | | 1/3 Standardfarbtiefe | | 1/3 Standardfarbtiefe |
| | Buntheit: | 99,7 | Buntheit: | 93,7 |
| PE | merklich höhere Farbstärke als Vergleichsbeispiel 1 | | merklich niedrigere Farbstärke als Beispiel 1 | |
| NC | Viskosität: 79 mPas | | Viskosität: 98 mPas | |
| FD | Viskosität: 106 mPas | | Viskosität: 113,5 mPas | |

Im HDPE-System zeigt Beispiel 1 erhöhte Farbstärke und Chroma, in den Drucksystemen erniedrigte Rheologie, im PE-System erhöhte Farbstärke.

### Beispiel 2

380 g eines handelsüblichen Pigments P.Y. 74 werden mit 20 g Pigmentdispergator P.Y. 62 mechanisch gemischt.
In den FD- und NC-Systemen werden farbstarke Drucke von hoher Reinheit erhalten, die Viskosität der Druckfarben ist niedrig.

### Beispiel 3

380 g eines handelsüblichen Pigments P.Y. 74 werden mit 40 g Pigmentdispergator P.Y. 62 mechanisch gemischt.
In den FD- und NC-Systemen werden farbstarke Drucke von hoher Reinheit erhalten, die Viskosität der Druckfarben ist niedrig.

### Beispiel 4: Synthese P.Y. 62 unverlackt

### a) Diazokomponente

109 Teile o-Nitroanilin-p-sulfonsäure werden in 210 ml Wasser und 118 ml Salzsäure 31 %ig angeschlämmt. Mit Eis wird auf 4°C abgekühlt und mit 65 ml Natriumnitritlösung 40 %ig diazotiert.

### b) Kuppler

1345 ml Wasser, 80 ml Natronlauge 25 %ig und 95,5 g Acetessig-o-toluidid werden 1 h gerührt, mit Eis wird auf 10°C abgekühlt, dann wird der Kuppler mit 45 ml Essigsäure 80 %ig gefällt. Mit Essigsäure wird pH 6,0 gestellt.

### c) Kupplung

Die Diazosuspension wird unter die Oberfläche der Kuppelgutsuspension zugegeben. Die Kuppelsuspension wird filtriert, der Presskuchen mit Wasser gewaschen. Es wird 30 %iger wässrig-feuchter Presskuchen der unverlackten P.Y. 62 erhalten.

### Beispiel 5

### a) Diazokomponente

42 Teile 5-Nitro-2-aminoanisol werden in 105 Teilen Wasser und 59 ml Salzsäure 31 %ig angeschlämmt. Mit Eis wird auf 0°C abgekühlt, durch Zugabe von 33 ml Natriumnitrit-Lösung 40 %ig diazotiert.

### b) Kuppler und Pigmentdispergator

In 672 ml Wasser und 40 ml Natronlauge 25 %ig werden 51,7 Teile Acetessig-o-anisidid gelöst. Nach Zugabe von 1,8 Teilen einer 30 %igen wässrigen Lösung von Natriumlaurylsulfat wird durch Zugabe von Eis auf 10°C abgekühlt. Durch Zugabe von 22 ml Essigsäure 80 %ig wird der Kuppler gefällt. Mit Essigsäure wird pH 6 bis 7 eingestellt. Dann wird eine Lösung von 10 Teilen eines maleinsäuremodifizierten Kolophoniumharzester in 84 ml Wasser und 10,5 ml Natronlauge 25%ig zugegeben und mit Essigsäure 80 %ig auf pH 9,8 gestellt. Es werden 3,2 Teile eines 30 %igen, wässrig-feuchten Presskuchens von unverlacktem P.Y. 62, hergestellt gemäß Beispiel 4, zugegeben.

### c) Kupplung

Die Diazokomponente wird in einer Stunde zum Kuppler zugegeben.

### d) Zugabe eines Hilfsmittels und Verlackung des Pigmentdispergators

Es werden 4,8 Teile Cocosfettamin zugegeben. Dann werden 0,3 Teile Calciumchlorid, gelöst in 30 Teilen Wasser, zugegeben. Es wird mit Dampf auf 80°C erwärmt und 17 Stunden bei 80°C gerührt. Die Suspension wird filtriert, der Presskuchen wird bei 130°C getrocknet.

Im NC-System werden farbstarke Drucke erhalten mit reinem Farbton und hohem Glanz und Transparenz, die Viskosität der Druckfarbe ist niedrig.

## Patentansprüche

1. Pigmentzubereitung, enthaltend C.I. Pigment Yellow 74 gemäß Formel (I) als Basispigment und C.I. Pigment Yellow 62 gemäß Formel (II) als Pigmentdispergator.

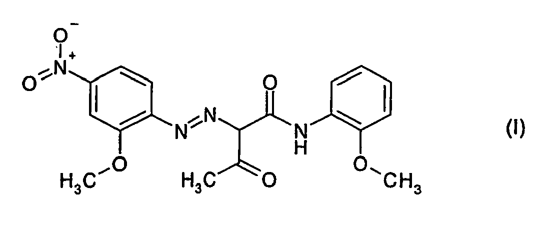

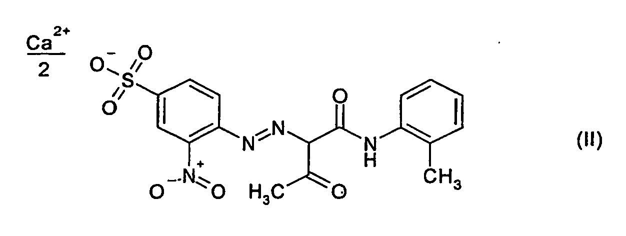

2. Pigmentzubereitung nach Anspruch 1, enthaltend
a) 50 bis 99,9 Gew.-% C.I. Pigment Yellow 74,
b) 0,1 bis 25 Gew.% C.I. Pigment Yellow 62,
c) 0 bis 25 Gew.-% an Hilfsmitteln,
wobei die Anteile der jeweiligen Komponenten auf das Gesamtgewicht der Zubereitung (100 Gew.-%) bezogen sind.

3. Pigmentzubereitung nach Anspruch 1 oder 2, enthaltend
a) 60 bis 99,5 Gew.-% C.I. Pigment Yellow 74,
b) 0,5 bis 15 Gew.-% C.I. Pigment Yellow 62,
c) 0,1 bis 15 Gew.-% an Hilfsmitteln,
wobei die Anteile der jeweiligen Komponenten auf das Gesamtgewicht der Zubereitung (100 Gew.-%) bezogen sind.

4. Pigmentzubereitung nach einem oder mehreren der Ansprüche 1 bis 3, enthaltend
a) 65 bis 99 Gew.-% C.I. Pigment Yellow 74,
b) 1 bis 10 Gew.-% C.I. Pigment Yellow 62,
c) 0,1 bis 15 Gew.-% an Hilfsmitteln,
wobei die Anteile der jeweiligen Komponenten auf das Gesamtgewicht der Zubereitung (100 Gew.-%) bezogen sind.

5. Verfahren zur Herstellung einer Pigmentzubereitung nach einem oder mehreren der Ansprüche 1 bis 4, **dadurch gekennzeichnet, dass** man das Basispigment und den Pigmentdispergator, und gegebenenfalls das oder die Hilfsmittel miteinander mischt.

6. Verfahren zur Herstellung einer Pigmentzubereitung nach einem oder mehreren der Ansprüche 1 bis 4, **dadurch gekennzeichnet, dass** man den Pigmentdispergator und das Basispigment gemeinsam synthetisiert.

7. Verwendung einer Pigmentzubereitung nach einem oder mehreren der Ansprüche 1 bis 4 zum Pigmentieren von hochmolekularen organischen Materialien natürlicher oder synthetischer Herkunft, beispielsweise von Kunststoffen, Harzen, Lacken, Anstrichfarben, elektrophotographischen Tonern und Entwicklern, Elektretmaterialien, Farbfiltern sowie von Tinten, Ink-Jet-Tinten, Druckfarben und Saatgut.

8. Verwendung nach Anspruch 7 zum Pigmentieren von lösemittelhaltigen und wässrigen Druckfarbensystemen.

## Claims

1. A pigment preparation comprising C.I. Pigment Yellow 74 of formula (I) as base pigment and C.I. Pigment Yellow 62 of formula (II) as pigment dispersant

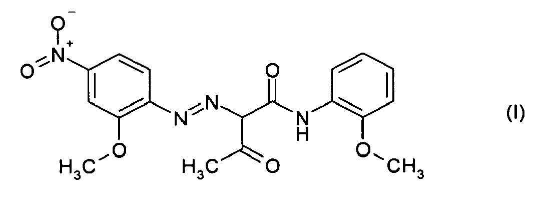

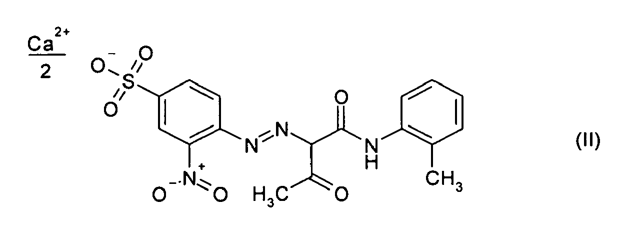

2. The pigment preparation as claimed in claim 1, containing
a) 50% to 99.9% by weight of C.I. Pigment Yellow 74,
b) 0.1% to 25% by weight of C.I. Pigment Yellow 62
c) 0 to 25% by weight of auxiliaries,
the fractions of the respective components being based on the total weight of the preparation (100% by weight).

3. The pigment preparation as claimed in claim 1 or 2, containing
a) 60% to 99.5% by weight of C.I. Pigment Yellow 74,
b) 0.5% to 15% by weight of C.I. Pigment Yellow 62
c) 0.1 to 15% by weight of auxiliaries,
the fractions of the respective components being based on the total weight of the preparation (100% by weight).

4. The pigment preparation as claimed in one or more of claims 1 to 3, containing
a) 65% to 99% by weight of C.I. Pigment Yellow 74,
b) 1% to 10% by weight of C.I. Pigment Yellow 62
c) 0.1 to 15% by weight of auxiliaries,
the fractions of the respective components being based on the total weight of the preparation (100% by weight).

5. A process for producing a pigment preparation as claimed in one or more of claims 1 to 4, which comprises mixing the base pigment and the pigment dispersant, and, where appropriate, the auxiliary or auxiliaries with one another.

6. A process for producing a pigment preparation as claimed in one or more of claims 1 to 4, which comprises jointly synthesizing the pigment dispersant and the base pigment.

7. The use of a pigment preparation as claimed in one or more of claims 1 to 4 for pigmenting high molecular weight organic materials of natural or synthetic origin, such as plastics, resins, varnishes, paints, electrophotographic toners and developers, electret materials, color filters, and also inks, including ink-jet inks and printing inks, and seed.

8. The use as claimed in claim 7 for pigmenting solvent-borne and aqueous printing ink systems.

## Revendications

1. Composition de pigment, contenant du pigment C.I. Yellow 74 selon la formule (I) en tant que pigment de base et du pigment C.I. Yellow 62 selon la formule (II) en tant que dispersant pigmentaire.

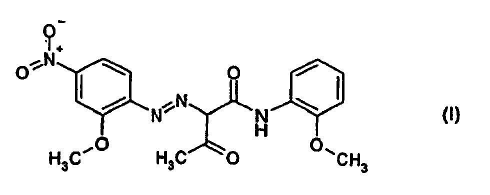

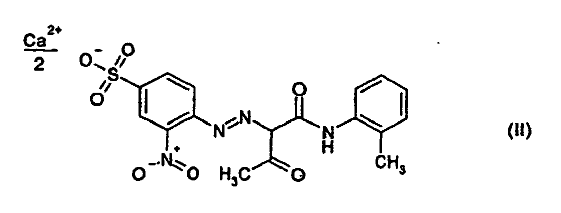

2. Composition de pigment selon la revendication 1, contenant
a) 50 à 99,9 % en poids de pigment C.I. Yellow 74,
b) 0,1 à 25 % en poids de pigment C.I. Yellow 62,
c) 0 à 25 % en poids d'adjuvants,
les proportions des composants respectifs étant par rapport au poids total de la composition (100 % en poids).

3. Composition de pigment selon la revendication 1 ou 2, contenant
a) 60 à 99,5 % en poids de pigment C.I. Yellow 74,
b) 0,5 à 15 % en poids de pigment C.I. Yellow 62,
c) 0,1 à 15 % en poids d'adjuvants,
les proportions des composants respectifs étant par rapport au poids total de la composition (100 % en poids).

4. Composition de pigment selon une ou plusieurs des revendications 1 à 3, contenant
a) 65 à 99 % en poids de pigment C.I. Yellow 74,
b) 1 à 10 % en poids de pigment C.I. Yellow 62,
c) 0,1 à 15 % en poids d'adjuvants,
les proportions des composants respectifs étant par rapport au poids total de la composition (100 % en poids).

5. Procédé pour la préparation d'une composition de pigment selon une ou plusieurs des revendications 1 à 4, **caractérisé en ce qu'**on mélange ensemble le pigment de base et le dispersant pigmentaire, et éventuellement l'adjuvant ou les adjuvants.

6. Procédé pour la préparation d'une composition de pigment selon une ou plusieurs des revendications 1 à 4, **caractérisé en ce qu'**on synthétise ensemble le dispersant pigmentaire et le pigment de base.

7. Utilisation d'une composition de pigment selon une ou plusieurs des revendications 1 à 4, pour la pigmentation de matières organiques de masse moléculaire élevée, d'origine naturelle ou synthétique, par exemple de matières plastiques, de résines, de laques, de peintures, de toners et développeurs électrophotographiques, de matériaux électrets, de filtres colorés ainsi que d'encres, d'encres pour impression par jet d'encre, d'encres d'imprimerie et de semences.

8. Utilisation selon la revendication 7, pour la pigmentation de systèmes d'encres d'imprimerie aqueux et contenant des solvants.
